# FASCICULE DE BREVET EUROPEEN

(11) **EP 0 876 929 B1**
(45) Date de publication et mention de la délivrance du brevet: **11.09.2002**
(21) Numéro de dépôt: 97450008.4
(22) Date de dépôt: 09.05.1997
(51) Int. Cl.: B60D 1/42, B62D 53/08, B60D 1/06

(54) **DIspositif de liaison intégrale, en deux points, d'une remorque avec un véhicule, muni de reglages**
Integrierte Zweipunkt-Verbindungsvorrichtung für einen Anhänger mit einem Kraftfahrzeug, mit einer Einstellvorrichtung versehen
Two point integral connecting device between trailer and vehicle provided with adjusting means

(43) Date de publication de la demande: 11.11.1998
(73) Titulaire: Paul Ledon, Société à Responsabilité Limitée, 79200 Parthenay (FR)
(72) Inventeur: Morin, André, 79200 Parthenay (FR); Morin, Nicole, 79200 Parthenay (FR)
(74) Mandataire: Thébault, Jean-Louis

(56) Documents cités:
- WO-A-91/08940
- FR-A- 2 740 735

## Description

La présente invention concerne un dispositif de liaison intégrale, en deux points, d'une remorque avec un véhicule, liaison du type à attache en partie arrière et sur le toit du véhicule.

On connaît des remorques du commerce, notamment des remorques vendues sous la marque CLIPCAR, qui comprennent une cellule montée sur un essieu et dont la particularité consiste en ce que l'attelage est intégral, réalisé en deux points, l'un à l'arrière du véhicule, en partie centrale et l'autre sur le toit du véhicule ou plus exactement sur un support rapporté sur ledit toit du véhicule en sorte de pouvoir retirer ce support en dehors des phases d'utilisation.

Ce type de remorque est particulièrement intéressant car il est intégral avec le véhicule, une fois attelé, ce qui procure des conditions tout à fait agréables de conduite, en ordre de marche.

De plus, les manoeuvres sont particulièrement aisées, plus encore en marche arrière, puisque l'attelage en deux points interdit l'angle de pivotement entre la remorque et le véhicule, si délicat pour certains conducteurs et qui nécessite de savoir contre-braquer.

Si ce type de remorque peut être à usage loisir mais aussi à usage commercial pour la vente ambulante et donne toute satisfaction, il subsiste un problème qui est celui de la phase d'attelage de ladite remorque au véhicule car il faut assurer la liaison en deux points, ce qui est particulièrement facile lorsque le véhicule et la remorque sont sur un terrain plat, alignés mais on le sait, ce cas est théorique.

La plupart du temps, les déclivités et les accidents de terrain rendent la manoeuvre d'attelage délicate, plus encore lorsque le conducteur est seul.

De plus, le point de liaison sur le toit est solidaire d'un support sous forme de barres de toit, rapportées, ce qui pose un autre problème.

En effet, ce point de liaison fait saillie au-dessus des barres ce qui, lorsque les barres de toit sont en place, interdit leur utilisation pour recevoir une charge quelconque. Ceci est particulièrement gênant lorsque la remorque est dételée et immobilisée sur un site donné et que l'utilisateur souhaite utiliser son véhicule de façon normale et veut transporter des produits volumineux qui nécessitent un chargement sur les barres de toit.

Une autre solution consiste à disposer de deux jeux de barres de toit, l'un équipé d'un point de liaison et l'autre exempt d'un tel point de liaison, mais outre l'investissement inutile, il faut de plus démonter et remonter les jeux de barres en fonction des utilisations, confirmant ainsi que cette solution est déraisonnable.

L'art antérieur est illustré par la demande de brevet WO-A-91/08940 qui suggère des moyens à coulissement pour assurer un déplacement horizontal par rapport au crochet arrière du véhicule tracteur. De tels moyens restent complexes à mettre en oeuvre et d'un prix de revient industriel trop élevé. De plus, l'ajustement n'est pas si simple et dans certaines conditions, il est difficile d'atteler.

La présente invention vise à pallier ces inconvénients en proposant un dispositif de liaison intégral, en deux points, d'une remorque avec un véhicule, qui facilite les manoeuvres d'attelage, pratiquement quelles que soient les déclivités, qui permet l'utilisation des barres de toit lorsque la remorque est dételée, qui peut être adapté sur les remorques et véhicules existants et qui reste d'une utilisation simple et pratique.

A cet effet, selon l'invention, le dispositif de liaison intégrale, en deux points de liaison avant et arrière, d'une remorque de forme adaptée pour épouser en partie la forme du véhicule, ladite remorque étant équipée d'une première tête d'attelage solidaire de l'avant de la remorque et d'une seconde tête d'attelage solidaire du châssis de la remorque et ledit véhicule étant équipé sur le toit, en position sensiblement centrale d'une première boule et à l'arrière d'une seconde boule, prévues pour coopérer respectivement avec lesdites première et seconde têtes de la remorque, se caractérise en ce qu'il comprend des moyens de liaison articulée, interposés entre la seconde tête d'attelage et le châssis de la remorque, au moins dans le plan vertical et/ou horizontal.

Plus particulièrement, ces moyens de liaison articulée comprennent un bâti articulé autour d'un axe transversal sensiblement horizontal, comprenant au moins une barre de traction prévue pour recevoir un axe sensiblement vertical, perpendiculaire à l'axe transversal autour duquel la seconde tête d'attelage est montée pivotante.

Ce bâti, selon un mode de réalisation préférentiel, comprend un cadre comportant deux montants latéraux et un montant frontal, parallèle à la barre de traction, la seconde tête d'attelage étant munie d'une cornière prévue pour coopérer à glissement avec ledit montant frontal.

En complément pour la sécurité, la cornière est équipée d'une goupille de verrouillage susceptible de coopérer avec un trou ménagé dans le montant frontal lorsque la remorque est alignée avec le véhicule.

Selon une autre caractéristique de l'invention, la première boule d'attelage est portée par des moyens de déplacement en translation suivant la direction d'avancement du véhicule.

Selon un mode de réalisation particulier, les moyens de déplacement en translation comprennent deux barres de toit équipées de deux rails parallèles à la direction d'avancement de l'ensemble véhicule/remorque, un chariot mobile entre ces deux rails, ledit chariot portant une embase sur laquelle est montée la première boule d'attelage.

Cette embase est montée pivotante autour d'un axe avec des moyens de verrouillage entre deux positions l'une en saillie au-dessus des barres de toit et l'autre escamotée au-dessous desdites barres.

Selon un perfectionnement, le chariot comprend une poignée de manoeuvre accessible du bord du toit du véhicule, pour en faciliter sa manoeuvre.

La présente invention est décrite ci-après selon un mode de réalisation particulier, non limitatif, en regard des dessins annexés sur lesquels les figures représentent :
- figure 1A, une vue en perspective d'un véhicule et d'une remorque équipés du dispositif d'attelage intégral en deux points selon l'invention, avant attelage,
- figure 1B, une vue de détail en perspective du point de liaison de toit et des barres de toit de la figure 1,
- figures 2A, 2B, une vue en coupe transversale, encore plus détaillée du seul point de liaison de toit, respectivement dans les deux positions en saillie et escamotée,
- figure 3A, une vue de détail, en coupe longitudinale suivant la ligne 3-3 de la figure 3B, du point de liaison arrière, et
- figure 3B, une vue de dessus du point de liaison arrière.

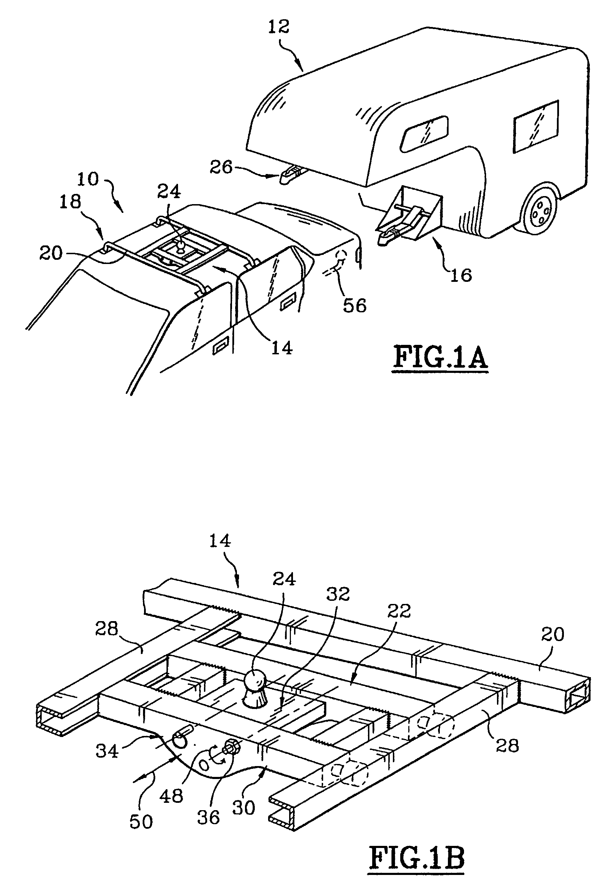

Sur la figure 1A, on a représenté un véhicule 10 et une remorque 12, avec un point 14 de liaison avant et un point 16 de liaison arrière.

Le point 14 de liaison avant comprend une structure support 18, comportant deux barres 20 de toit, équipées d'une platine 22 sur laquelle est montée une première boule 24 d'attelage. Cette boule est prévue pour recevoir une première tête d'attelage 26, à verrouillage, de type connu, cette première tête d'attelage étant portée par la remorque. La forme et l'emplacement de cette tête sont adaptés pour venir, en position attelée, au-dessus dudit point 14 de liaison avant.

En se référant à la figure 1B, on retrouve l'une des barres 20 de toit, ainsi que la platine 22. Cette platine comprend deux rails 28 de guidage, solidaires des barres de toit, par exemple par soudure, et parallèles à la direction d'avancement du véhicule ainsi qu'un chariot 30, mobile en translation entre ces rails, grâce à des galets par exemple dans le mode de réalisation représenté. Ce chariot est équipé d'une embase 32 sur laquelle est rapportée la première boule 24 d'attelage.

Cette embase 32, solidaire du chariot 30, est donc mobile en translation suivant la direction d'avancement du véhicule.

Cette embase comprend aussi des moyens 34 d'escamotage en sorte de prendre deux positions l'une de travail dans laquelle la boule 24 d'attelage est en saillie au-dessus des barres de toit pour permettre l'attelage de la remorque et l'autre escamotée dans laquelle la première boule 24 d'attelage est rangée au-dessous des barres de toit pour permettre l'utilisation des barres de toit à des fins de chargement.

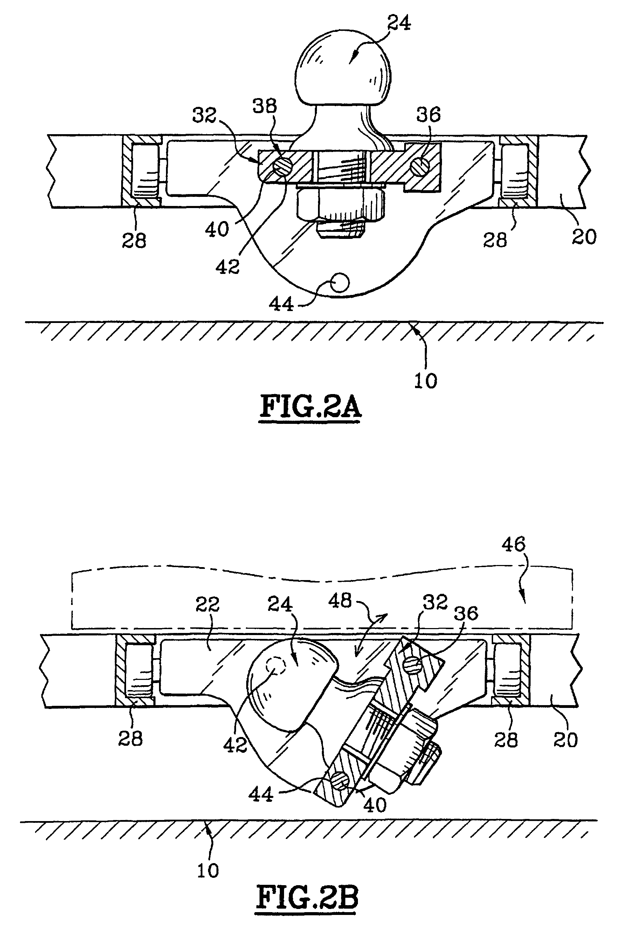

Ainsi que cela est plus visible encore sur les figures 2A et 2B, ces moyens 34 d'escamotage comprennent un axe 36 de pivotement de l'embase, perpendiculaire aux barres de toit, et des moyens 38 de verrouillage dans les deux positions, en saillie et escamotée.

Ces moyens 38 de verrouillage comprennent une goupille 40 susceptible de pénétrer dans deux trous 42 et 44 traversants, ces deux trous correspondant aux positions en saillie et escamotée, représentées sur les figures 2A et 2B.

Sur la figure 2A, la boule 24 d'attelage est en saillie au-dessus des barres 20 de toit, la goupille est dans le trou 42.

Sur la figure 2B, la boule 24 est escamotée par pivotement de l'embase 32 par rapport à la platine 22 autour de l'axe 36 de pivotement, la goupille 40 est dans le trou 44. Dans cette position, les barres de toit peuvent être utilisées comme support de charge 46, celle-ci étant symboliquement représentée en trait discontinu sur cette figure.

Les mouvements en rotation et en translation avant/arrière du chariot de la platine sont symbolisés par les flèches 48 et 50.

Il est possible de prévoir des moyens de manoeuvre du chariot avec une poignée rallongée pour faciliter l'accès à l'utilisateur depuis le bord du toit, si nécessaire, de tels aménagements restent à la portée de l'homme de l'art.

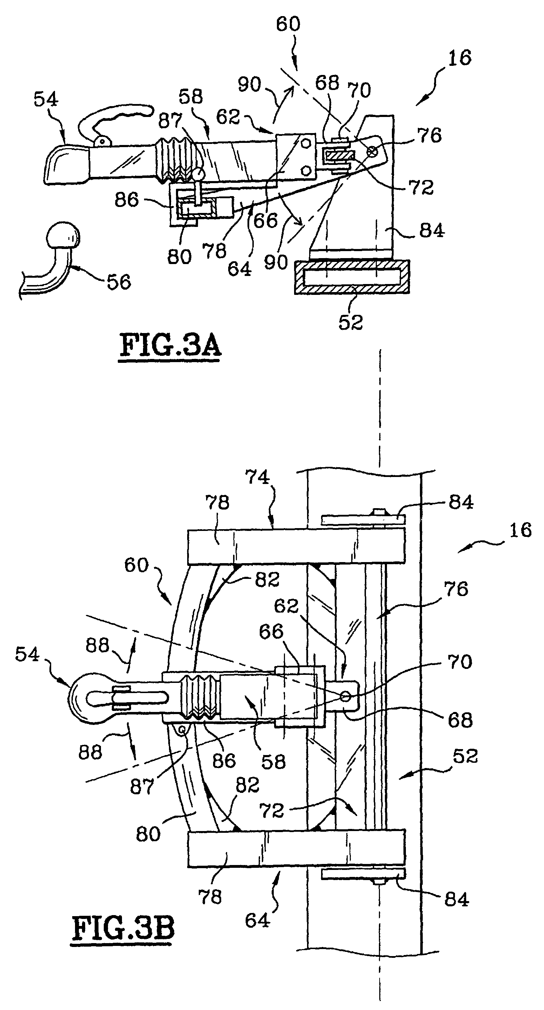

On se reporte utilement aux figures 3A et 3B sur lesquelles on a représenté le point 16 de liaison arrière, porté par la remorque.

Ce point de liaison arrière est solidaire du châssis 52 de la remorque, représenté très partiellement sur ces figures puisqu'il n'intéresse pas directement l'invention.

Le point 16 d'attelage arrière comprend une seconde tête 54 d'attelage, de type identique à la première tête 26 d'attelage, prévue pour coopérer avec une seconde boule 56 d'attelage, fixe et solidaire de l'arrière du véhicule 10.

Cette seconde tête 54 d'attelage comprend de façon connue des moyens de freinage 58, à inertie.

Ce point 16 d'attelage arrière comprend surtout des moyens 60 articulés de fixation de cette tête 26 d'attelage sur le châssis 52.

Ces moyens 60 articulés comprennent des moyens 62 de pivotement en rotation dans le plan horizontal, rapportés sur des moyens 64 de pivotement dans le plan vertical, en sorte de pouvoir réaliser des déplacements combinés.

Les moyens 62 de pivotement comportent deux chapes 66, 68 solidaires l'une de l'autre, la première chape 66 étant fixée sur la seconde tête 54 d'attelage et la seconde chape 68 étant articulée autour d'un axe 70, traversant une barre 72 de traction qui fait partie des moyens 64 de pivotement dans le plan vertical.

Cette barre 72 de traction est solidaire d'un bâti 74 qui est lui-même articulé autour d'un axe 76 de pivotement, transversal par rapport à la direction d'avancement de l'ensemble véhicule/remorque.

Ce bâti, outre cette barre 72 de traction comprend deux montants 78 latéraux, articulés directement sur l'axe 76 de pivotement, un montant 80 frontal, curviligne dans le mode de réalisation retenu mais qui pourrait être rectiligne en prévoyant un jeu suffisant de fonctionnement, qui relie ces deux montants latéraux en sorte de former un cadre rigide avec la barre 72 de traction. Des goussets 82 de renforts sont mentionnés dans les angles du cadre sur les dessins pour la reprise des efforts engendrés durant les phases de roulage de l'ensemble sur route.

On note aussi que l'axe 76 de pivotement est fixé sur des ailes 84 latérales rapportées sur le châssis 52, en sorte d'autoriser un débattement suffisant.

En complément de guidage de la seconde tête 54 d'attelage, il est prévu une cornière 86, solidaire de ladite tête d'attelage prévue pour coopérer à glissement avec le montant 80 frontal du bâti 74. Cette cornière comprend en outre une goupille 87 de verrouillage qui coopère avec un trou ménagé dans ledit montant frontal. Cette goupille ne peut pénétrer dans le trou ménagé dans le montant frontal que lorsque la remorque est parfaitement alignée avec le véhicule.

Les différents mouvements autorisés par le point 16 de liaison arrière sont symbolisés par les flèches à double sens, 88 et 90.

Ainsi pour la mise en oeuvre du dispositif, l'utilisateur manoeuvre son véhicule pour l'aligner au mieux avec la remorque qui est généralement en appui sur son essieu et sur un jeu de béquilles.

Par manoeuvre du point 16 d'attelage arrière, dans le plan vertical et horizontal, la seconde tête 54 d'attelage est amenée au droit de la seconde boule 56 d'attelage porté par le véhicule, même lorsque la remorque ne se trouve pas parfaitement alignée avec le véhicule ou que des déclivités provoquent des décalages.

L'accrochage avec le point de liaison arrière est encore plus facile que sur une remorque simple, à un seul point de liaison.

Il suffit ensuite de faire avancer très légèrement le véhicule, après avoir retiré les béquilles, pour que la remorque vienne dans l'alignement du véhicule, ce qui provoque l'enclenchement de la goupille 87 dans le trou du montant frontal 80, assurant un alignement définitif.

Il suffit alors à l'utilisateur de déplacer en translation le chariot 22 pour faire venir la première boule 24 d'attelage sous la première tête 26 de la remorque et assurer ainsi l'attelage en deux points.

L'utilisateur peut aussi, suivant les circonstances agir à l'inverse, c'est à dire aligner la première boule 24 d'attelage avec la première tête 26 et par retrait des béquilles assurer le premier point de liaison.

Ensuite, il suffit de manoeuvrer le bâti 74, dans les plans vertical et horizontal, en combinaison, pour amener la seconde tête 54 au droit de la seconde boule 56 d'attelage.

Dès que le véhicule avance, la remorque se met dans l'alignement et la goupille 87 s'enclenche pour assurer définitivement cet alignement, dans toutes les circonstances de roulage de l'ensemble véhicule/remorque.

On note que, lorsque l'utilisateur ne tracte pas de remorque, il peut abaisser l'embase 32 par pivotement autour de l'axe 36 pour escamoter la première boule qu'elle porte.

Dès lors, l'utilisateur peut conserver les barres de toit en place et s'en servir pour le transport de charges.

## Revendications

1. Dispositif de liaison intégrale, en deux points de liaison avant et arrière, d'un véhicule (10) avec une remorque (12) de forme adaptée pour épouser en partie la forme du véhicule, ladite remorque étant équipée d'une première tête (26) d'attelage solidaire de l'avant de la remorque et d'une seconde tête (16) d'attelage solidaire du châssis (52) de la remorque et ledit véhicule étant équipé sur le toit, en position sensiblement centrale d'une première boule (24) d'attelage et à l'arrière d'une seconde boule (56) d'attelage, prévues pour coopérer respectivement avec lesdites première et seconde têtes d'attelage de la remorque, **caractérisé en ce qu'**il comprend des moyens (60) de liaison, interposés entre la seconde tête d'attelage et le châssis de la remorque, ces moyens de liaison étant articulés dans les plans vertical et horizontal.

2. Dispositif de liaison intégrale selon la revendication 1, **caractérisé en ce que** les moyens (60) de liaison articulée comprennent un bâti (74) articulé autour d'un axe (76) transversal sensiblement horizontal, comprenant au moins une barre (72) de traction prévue pour recevoir un axe (70) sensiblement vertical, perpendiculaire à l'axe (76) transversal autour duquel la seconde tête (26) d'attelage est montée pivotante.

3. Dispositif de liaison intégrale selon la revendication 2, **caractérisé en ce que** le bâti (74) comprend un cadre comportant deux montants (78) latéraux et un montant (80) frontal, parallèle à la barre de traction, la seconde tête (26) d'attelage étant munie d'une cornière (86) prévue pour coopérer à glissement avec ledit montant frontal.

4. Dispositif de liaison intégrale selon la revendication 2, **caractérisé en ce que** la cornière (86) est équipée d'une goupille (87) de verrouillage susceptible de coopérer avec un trou ménagé dans le montant (80) frontal lorsque la remorque (12) est alignée avec le véhicule (10).

5. Dispositif de liaison intégrale selon l'une quelconque des revendications précédentes, **caractérisé en ce que** la première boule (24) d'attelage est portée par des moyens (30) de déplacement en translation suivant la direction d'avancement du véhicule.

6. Dispositif de liaison intégrale selon la revendication 5, **caractérisé en ce que** les moyens de déplacement en translation comprennent deux barres (20) de toit équipées de deux rails (28) parallèles à la direction d'avancement de l'ensemble véhicule/remorque, un chariot (30) mobile entre ces deux rails, ledit chariot portant un platine (22) avec une embase (32) sur laquelle est montée la première boule (24) d'attelage.

7. Dispositif de liaison intégrale selon la revendication 6, **caractérisé en ce que** l'embase (32) est montée pivotante autour d'un axe (36) avec des moyens (34) de verrouillage entre deux positions l'une en saillie au-dessus des barres de toit et l'autre escamotée au-dessous desdites barres.

8. Dispositif de liaison intégrale selon la revendication 6 ou 7, **caractérisé en ce que** le chariot (30) comprend une poignée de manoeuvre accessible du bord du toit du véhicule.

## Patentansprüche

1. Vorrichtung zur integralen Verbindung an zwei Verbindungspunkten, einem vorderen und einem hinteren, eines Fahrzeugs (10) mit einem Anhänger (12), der eine Form aufweist, die so beschaffen ist, daß sie sich an die Form des Fahrzeugs anschmiegt, wobei der Anhänger mit einem ersten Kupplungskopf (26), der mit der Vorderseite des Anhängers fest verbunden ist, und mit einem zweiten Kupplungskopf (16), der mit dem Rahmen (52) des Anhängers fest verbunden ist, ausgerüstet ist und das Fahrzeug am Dach an einer im wesentlichen mittigen Position mit einer ersten Kupplungskugel (24) und hinten mit einer zweiten Kupplungskugel (56), die dazu vorgesehen sind, mit dem ersten bzw. dem zweiten Kupplungskopf des Anhängers zusammenzuwirken, ausgerüstet ist, **dadurch gekennzeichnet, daß** sie Verbindungsmittel (60) umfaßt, die zwischen dem zweiten Kupplungskopf und dem Rahmen des Anhängers angeordnet sind und in einer vertikalen und in einer horizontalen Ebene gelenkig sind.

2. Vorrichtung zur integralen Verbindung nach Anspruch 1, **dadurch gekennzeichnet, daß** die gelenkigen Verbindungsmittel (60) ein Tragelement (74) umfassen, das um eine im wesentlichen horizontale transversale Achse (76) angelenkt ist und wenigstens einen Zugstab (72) umfaßt, der dazu vorgesehen ist, eine im wesentlichen vertikale Achse (70) senkrecht zur transversalen Achse (76), um die der zweite Kupplungskopf (26) schwenkbar angebracht ist, aufzunehmen.

3. Vorrichtung zur integralen Verbindung nach Anspruch 2, **dadurch gekennzeichnet, daß** das Tragelement (74) einen Rahmen umfaßt, der zwei Seitenstreben (78) und eine vordere Strebe (80) parallel zum Zugstab umfaßt, wobei der zweite Kupplungskopf (26) mit einem Winkelprofil (86) versehen ist, das dazu vorgesehen ist, mit der vorderen Strebe gleitend zusammenzuwirken.

4. Vorrichtung zur integralen Verbindung nach Anspruch 2, **dadurch gekennzeichnet, daß** das Winkelprofil (86) mit einem Verriegelungsstift (87) ausgerüstet ist, der mit einem in der vorderen Strebe (80) ausgebildeten Loch zusammenwirken kann, wenn der Anhänger (12) auf das Fahrzeug (10) ausgerichtet ist.

5. Vorrichtung zur integralen Verbindung nach einem der vorhergehenden Ansprüche, **dadurch gekennzeichnet, daß** die erste Kupplungskugel (24) durch Mittel (30) für die translatorische Verlagerung längs der Vorwärtsbewegungsrichtung des Fahrzeugs getragen wird.

6. Vorrichtung zur integralen Verbindung nach Anspruch 5, **dadurch gekennzeichnet, daß** die Mittel für die translatorische Verlagerung zwei Dachstäbe (20), die mit zwei zur Vorwärtsbewegungsrichtung der Einheit aus Fahrzeug/Anhänger parallelen Schienen (28) ausgerüstet sind, und einen zwischen diesen beiden Schienen beweglichen Schlitten (30), der eine Halteplatte (22) mit einer Grundplatte (32) trägt, auf der die erste Kupplungskugel (24) angebracht ist, umfassen.

7. Vorrichtung zur integralen Verbindung nach Anspruch 6, **dadurch gekennzeichnet, daß** die Grundplatte (32) schwenkbar um eine Achse (36) zusammen mit Verriegelungsmitteln (34) zwischen zwei Positionen, wovon eine über die Dachstäbe vorsteht und die andere unter diese Stäbe zurückgezogen ist, angebracht ist.

8. Vorrichtung zur integralen Verbindung nach Anspruch 6 oder 7, **dadurch gekennzeichnet, daß** der Schlitten (30) einen Betätigungsgriff aufweist, der von der Kante des Dachs des Fahrzeugs aus zugänglich ist.

## Claims

1. Device for the integral connection, at two front and rear connecting points, of a vehicle (10) with a trailer (12) with a shape adapted to partly match the shape of the vehicle, said trailer being equipped with a first coupling head (26) fixed to the front of the trailer and a second coupling head (16) fixed to the chassis (52) of the trailer and said vehicle being equipped on the roof, in a substantially central position, with a first coupling ball (24) and at the rear with a second coupling ball (56), designed to cooperate respectively with said first and second coupling heads of the trailer, **characterised in that** it comprises connection means (60), interposed between the second coupling head and the chassis of the trailer, said connection means being articulated in the vertical and horizontal planes.

2. Integral connection device according to claim 1, **characterised in that** the articulated connection means (60) comprise a structure (74) articulated about a substantially horizontal transverse shaft (76), comprising at least one traction bar (72) designed to receive a substantially vertical shaft (70), perpendicular to the transverse shaft (76) around which the second coupling head (26) is pivotally mounted.

3. Integral connection device according to claim 2, **characterised in that** the structure (74) comprises a frame including two lateral uprights (78) and a front upright (80), parallel to the traction bar, the second coupling head (26) being provided with a bracket (86) designed to cooperate slidingly with said front upright.

4. Integral connection device according to claim 2, **characterised in that** the bracket (86) is equipped with a locking pin (87) able to cooperate with a hole provided in the front upright (80) when the trailer (12) is aligned with the vehicle (10).

5. Integral connection device according to any one of the preceding claims, **characterised in that** the first coupling ball (24) is carried by means (30) of moving in translation in the direction of travel of the vehicle.

6. Integral connection device according to claim 5, **characterised in that** the means of moving in translation comprise two roof bars (20) equipped with two rails (28) parallel to the direction of travel of the vehicle/trailer assembly, a carriage (30) able to move between these two rails, said carriage carrying a panel (22) with a base (32) on which the first coupling ball (24) is mounted.

7. Integral connection device according to claim 6, **characterised in that** the base (32) is mounted so as to pivot about a shaft (36) with means (34) for locking between two positions, one projecting above the roof bars and the other retracted below said bars.

8. Integral connection device according to claim 6 or 7, **characterised in that** the carriage (30) comprises a manoeuvring handle accessible from the edge of the roof of the vehicle.
